# EUROPÄISCHE PATENTANMELDUNG

(11) **EP 2 548 428 A1**
(43) Veröffentlichungstag der Anmeldung: **23.01.2013**
(21) Anmeldenummer: 12401154.5
(22) Anmeldetag: 16.07.2012
(51) Int. Cl.: A01B 61/04

(54) **Aufhängungsvorrichtung**

(30) Priorität: 22.07.2011 DE 102011052063
(71) Anmelder: Amazonen-Werke H. Dreyer GmbH & Co. KG, 49205 Hasbergen (DE)
(72) Erfinder: Randasch, Holger, 15537 Grünheide OT Kienbaum (DE)

(57) **Zusammenfassung**

Aufhängungsvorrichtung zur Aufhängung eines Maschinenteils an einer Landmaschine , insbesondere eines Bodenbearbeitungswerkzeuges, mit zumindest einem das Maschinenteil tragenden Schwenkarm (5) sowie einem sich vorzugsweise quer zur Arbeitsrichtung erstreckenden Schwenkarmträger (2), an dem der Schwenkarm (5) mit einem Lagerkörper (6) schwenkbar gelagert ist, wobei der Lagerkörper (6) den Schwenkarmträger (2) umgreift und zwischen dem Lagerkörper (6) unter den davon umgriffenen Abschnitt des Schwenkarmträgers (2) mehrere elastische Lagerelemente (7) vorgesehen sind, die sich mit ihrer Längsachse im Wesentlichen parallel zu der Schwenkachse des Schwenkarmes (5) und der Längsachse des Schwenkträgers (2) erstrecken und durch Schwenkbewegungen des Schwenkarmes (5) eine zumindest teilweise Verformung erfahren. Um eine preiswertere Ausgestaltung der elastischen Lagerelemente (7) zu schaffen, welche ebenfalls nicht aus der Lagerung herauswandern, ist vorgesehen, dass jeweils zumindest zwei elastische Lagerelemente (7) mittels zumindest einer Verbindungsschnur (9) miteinander verbunden sind.

## Beschreibung

Die Erfindung betrifft eine Aufhängungsvorrichtung gemäß des Oberbegriffes des Patentanspruches 1.

Eine derartige Aufhängungsvorrichtung ist beispielsweise durch die EP 1 880 590 B1 bekannt. Bei dieser Aufhängungsvorrichtung sind die elastischen Lagerelemente gegenüber den seitlichen Bereichen im mittleren Bereich eingeschnürt ausgebildet. Diese Ausgestaltung hat sich in der Praxis bewährt, weil hierdurch erreicht wird, dass die elastischen Lagerelemente nicht aus der Lagerung herauswandern.

Die Herstellung dieser mittig eingeschritten Lagerelemente ist jedoch relativ kostenaufwändig.

Der Erfindung liegt die Aufgabe zu Grunde, eine preiswertere Ausgestaltung der elastischen Lagerelemente zu schaffen, welche ebenfalls nicht aus der Lagerung herauswandern.

Diese Aufgabe wird erfindungsgemäß dadurch gelöst, dass jeweils zumindest zwei elastische Lagerelemente mittels zumindest einer Verbindungsschnur miteinander verbunden sind.

Infolge dieser Maßnahme werden durch die den elastischen Lagerelement zugeordneten Verbindungsschnüren ein besseres verklemmen des Lagerelementes in dem Lagerkörper durch die Erzeugung eines erhöhten Druck und der daraus resultierenden höheren Reibung erreicht. Dieses wirkt dem möglichen Herauswandern der Lageelemente aus dem Lagerkörper entgegen. Hierbei ist vorgesehen, dass sämtliche einem Lagerkörper zugeordneten elastischen Lagerelemente jeweils mit zumindest einer Verbindungsschnur miteinander verbunden sind.

Hierbei kann vorgesehen sein, dass die Verbindungsschnüre zwischen dem Schwenkarmträger und dem jeweiligen Lagerkörper angeordnet sind und sich in Querrichtung zur Längsachse des Schwenkarmträgers erstrecken.

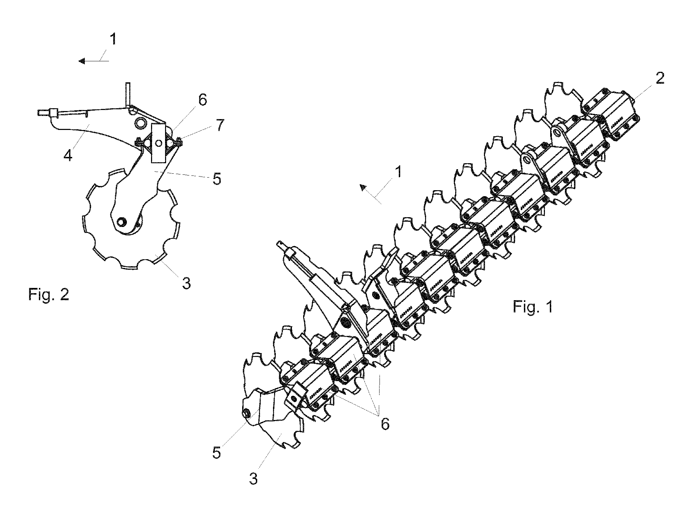

Weitere Einzelheiten der Erfindung sind der Beispielsbeschreibung und den Zeichnungen zu entnehmen. Hierbei zeigen
- Fig. 1: die an einem Schwenkarmträger mittels der Aufhängungsvorrichtungen angeordneten als Scheiben ausgebildeten Bodenbearbeitungswerkzeuge einer Scheibenegge in perspektivischer Darstellung,
- Fig. 2: die an einem Schwenkarmträger mittels der Aufhängungsvorrichtungen angeordneten als Scheiben ausgebildeten Bodenbearbeitungswerkzeuge einer Scheibenegge gemäß Fig. 1 in Seitenansicht,

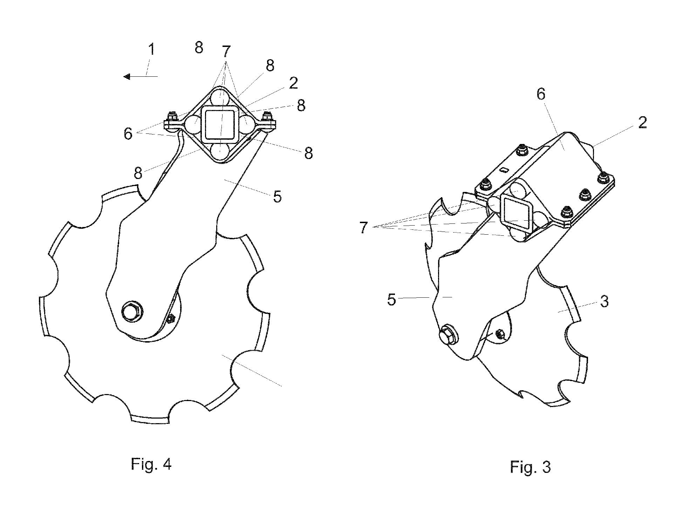

- Fig. 3: eine an einem Schwenkarmträger mittels einer Aufhängungsvorrichtung angeordnete und als Scheibe ausgebildete Bodenbearbeitungswerkzeug einer Scheibenegge in perspektivischer Darstellung und vergrößertem Maßstab,
- Fig. 4: das an einem Schwenkarmträger mittels einer Aufhängungsvorrichtung angeordnete und als Scheibe ausgebildete Bodenbearbeitungswerkzeug einer Scheibenegge in Seitenansicht gemäß Fig. 3,
- Fig. 5: der an einem Schwenkarmträger anzuordnende halbe Lagerkörper gemäß den Fig. 1 bis 4 mit zwei elastischen Lagerelementen in perspektivischer Darstellung,
- Fig. 6: ein elastisches Lagerelement gemäß der Fig. 5 in Vorderansicht und
- Fig. 7: das elastische Lagerelement gemäß der Fig. 6 in perspektivischer Darstellung.

An einem nicht dargestellten Rahmen einer als Kurzscheibenegge ausgebildeten Landmaschine sind zwei quer zur Fahrtrichtung 1 verlaufende Schwenkarmträger 2, von denen jedoch nur einer dargestellt ist, beabstandet hintereinander angeordnet. Der als Schwenkarmträger 2 ausgebildete Querbalken zur Aufhängung jeweils eines Maschinenteils, welches als Scheibe 3 ausgestaltetes Bodenbearbeitungswerkzeug ausgebildet ist, ist mittels geeigneter Zwischenelemente 4 an dem Maschinenrahmen angeordnet. Das als Scheibe 3 ausgebildete Bodenbearbeitungswerkzeug ist jeweils mittels eines Schwenkarmes 5 über einen Lagerkörper 6 an dem Schwenkarmträger 2 befestigt. Der Lagerkörper 6 umgreift den Querbalken 2. Zwischen dem Lagerkörper 6 und dem davon umgriffenen Abschnitt des Querbalkens 2 sind vier elastische Lagerelemente 7 angeordnet. Die elastischen Lagerelemente 7 sind beispielsweise als dicke gummischnurartige langgestreckte Wülste ausgebildet und erstrecken sich mit ihrer Längsachse parallel zu der Schwenkachse des Schwenkarmes 5 und der Längsachse des Querbalkens 2. Der Schwenkarm 5 mit dem Bodenbearbeitungswerkzeug 3 und dem Lagerkörper 6 können aufgrund der elastischen Lagerelementes 7 um die Längsachse des Querbalkens 2 gegen die Kraft der Lagerelementes 7, welche durch die Verformung der elastischen Lagerelemente7 entsteht, schwenken.

Außerdem kann der Schwenkarm 5 mit dem Bodenbearbeitungselement 3 im begrenzten Umfang ebenfalls durch elastische Verformung der elastischen Lagerelemente 7 seitlich ausweichen. Die Lagerkörper 6, welche den Schwenkarmträger 2 umgreifen, weisen einen vierkantförmigen Querschnitt auf. Ebenfalls weist der Schwenkarmträger 2 ein vierkantförmigen Querschnitt auf, wobei der Lagerkörper gegenüber dem Profil der Schwenkarmträger 2, in der Ausgangsstellung, um 45° verdreht ist, so dass sich der Zwischenraum zwischen dem Lagerkörper 6 und dem davon umgriffenen Schwenkarmträger 2 in vier Lagerelementekammern 8 untergliedert. In diesen vier Lagerelementekammern 8 ist jeweils ein elastisches Lagerelement 7 angeordnet.

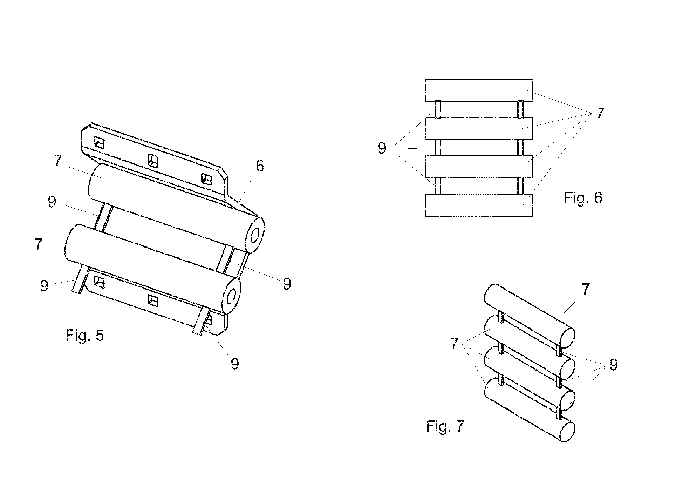

Gemäß den Fig. 5 bis 7 sind jeweils zumindest zwei elastische Lagerelemente 7 mittels zweier Verbindungsschnüre 9 miteinander verbunden. Hierbei sind sämtliche einem Lagerkörper 6 zugeordnete elastische Lagerelemente 7 jeweils mit zwei Schnüren 9 miteinander verbunden. Die Verbindungsschnüre 9 sind zwischen dem Schwenkarmträger 2 und dem jeweiligen Lagerkörper 6 angeordnet und erstrecken sich quer zur Längsachse des Schwenkarmträgers 2.

## Patentansprüche

1. Aufhängungsvorrichtung an einer Landmaschine zu Aufhängung eines Maschinenteils, insbesondere eines Bodenbearbeitungswerkzeuges, mit zumindest einem das Maschinenteil tragenden Schwenkarm sowie einem sich vorzugsweise quer zur Arbeitsrichtung erstreckenden Schwenkarmträger, an dem der Schwenkarm mit einem Lagerkörper schwenkbar gelagert ist, wobei der Lagerkörper den Schwenkarmträger umgreift und zwischen dem Lagerkörper unter den davon umgriffenen Abschnitt des Schwenkarmträgers mehrere elastische Lagerelemente vorgesehen sind, die sich mit ihrer Längsachse im Wesentlichen parallel zu der Schwenkachse des Schwenkarmes und der Längsachse des Schwenkträgers erstrecken und durch Schwenkbewegungen des Schwenkarmes eine zumindest teilweise Verformung erfahren, **dadurch gekennzeichnet, dass** jeweils zumindest zwei elastische Lagerelemente (7) mittels zumindest einer Verbindungsschnur (9) miteinander verbunden sind.

2. Aufhängungsvorrichtung nach Anspruch 1, **dadurch gekennzeichnet, dass** sämtliche einem Lagerkörper (6) zugeordneten elastischen Lagerelemente (7) jeweils mit zumindest einer Verbindungsschnur (9) miteinander verbunden sind.

3. Aufhängungsvorrichtung nach zumindest einem der vorstehenden Ansprüche, **dadurch gekennzeichnet, dass** die Verbindungsschnüre (9) zwischen dem Schwenkarmträger (2) und dem jeweiligen Lagerkörper (6) angeordnet sind und sich in Querrichtung zur Längsachse des Schwenkarmträgers (2) erstrecken.
